# DEMANDE DE BREVET EUROPEEN

(11) **EP 4 606 491 A1**
(43) Date de publication de la demande: **27.08.2025**
(21) Numéro de dépôt: 25157756.5
(22) Date de dépôt: 13.02.2025
(51) Int. Cl.: B05C 19/04, B05C 19/06

(54) **DISPOSITIF DE DISTRIBUTION D'UN MATÉRIAU**

(30) Priorité: 20.02.2024 CH 1732024
(71) Demandeur: Frewitt fabrique de machines S.A., 1763 Granges-Paccot (CH)
(72) Inventeur: VIRDIS, Antoine, 1724 FERPICLOZ (CH); GROSSRIEDER, Yves, 1773 Russy (CH); RHEME, Christian, 1725 POSIEUX (CH)
(74) Mandataire: BOVARD AG

(57) **Abrégé**

L'invention concerne un dispositif (10) de distribution linéaire d'un matériau (M). Celui-ci comprend un réservoir (20) monté mobile autour d'un axe définissant une direction longitudinale, le réservoir délimitant une cavité de stockage (42) et étant muni d'une première ouverture (50) pour l'entrée du matériau à l'intérieur de ladite cavité et d'une deuxième ouverture (60) sous la forme d'une fente longitudinale pour la sortie du matériau hors de ladite cavité. Le dispositif comprend également des moyens d'entraînement (30) du réservoir (20) dans un mouvement d'oscillation autour de son axe.

## Description

### Domaine technique de l'invention

La présente invention se rapporte au traitement de produits, notamment de poudres collantes ou pulvérulentes, pour leur distribution linéaire.

### État de la technique

Les poudres sont utilisées dans une multitude de procédés industriels, notamment dans l'industrie pharmaceutique, chimique, ou alimentaire.

Ces poudres sont typiquement obtenues en traitant dans un broyeur une poudre brute dont les grains ou les agglomérats ont un diamètre moyen compris par exemple entre quelques millimètres et plusieurs centimètres.

Le broyeur délivre la poudre ainsi obtenue par un orifice de sortie ou orifice d'amenée, généralement de forme circulaire.

Parfois, le traitement subséquent de la poudre nécessite que celle-ci soit répartie sur une distance supérieure à la dimension de l'orifice de sortie du broyeur. C'est le cas par exemple lorsque la poudre est destinée à former un film continu de largeur déterminée et qu'elle est déposée sous forme de couche de dimension appropriée sur un dispositif de réception aval tel qu'une bande de transport.

Pour que le film obtenu en sortie soit homogène, il est nécessaire que la répartition volumétrique et granulométrique de la poudre soit la plus optimale possible.

Il existe actuellement des systèmes de répartition mettant en œuvre des rails et des brosses qui étalent le matériau sur une surface de réception. D'autres systèmes utilisent des buses de répartition de produit.

Mais les systèmes à rails et brosses sont encombrants et difficilement adaptables à des types de matériaux différents, notamment des matériaux ayant une coulabilité différente. Les systèmes à buses, quant à eux, présentent l'inconvénient de se boucher facilement lorsque la poudre est une poudre collante.

En outre, ces différents systèmes ne permettent pas une distribution entièrement satisfaisante en termes d'homogénéité volumétrique et granulométrique, résultant dans des défauts fréquents sur le produit final.

### Résumé de l'invention

Un but de la présente invention est de proposer un dispositif de distribution linéaire de matériau permettant de résoudre les problèmes précités.

Ce but est atteint grâce à l'objet des revendications indépendantes. Des aspects plus spécifiques de la présente invention sont décrits dans les revendications dépendantes ainsi que dans la description.

De manière plus spécifique, un but de l'invention est atteint grâce à un dispositif de distribution linéaire d'un matériau, ledit dispositif comprenant :
- un réservoir monté mobile autour d'un axe définissant une direction longitudinale, le réservoir délimitant une cavité de stockage et étant muni d'une première ouverture pour l'entrée du matériau à l'intérieur de ladite cavité et d'une deuxième ouverture sous la forme d'une fente longitudinale pour la sortie du matériau hors de ladite cavité; et
- des moyens d'entraînement du réservoir dans un mouvement d'oscillation autour de son axe.

Le dispositif selon l'invention est destiné à la distribution d'un matériau sur une zone (segment ou bande) rectiligne de longueur L (ci-après zone de distribution), la longueur L correspondant à la longueur de la fente longitudinale du réservoir.

Plus spécifiquement, le dispositif selon l'invention est adapté au traitement d'un matériau amené par un orifice d'amenée de longueur L0, pour sa distribution sur une longueur L supérieure à L0, typiquement au moins 2 fois supérieure à L0, de préférence de 2 à 10 fois supérieure à L0.

Le dispositif de distribution selon l'invention est ainsi particulièrement destiné à être installé en aval d'un dispositif d'amenée délivrant le matériau à travers un orifice d'amenée de longueur L0 et en amont d'un dispositif de réception configuré pour recevoir le matériau distribué.

Le matériau à distribuer est typiquement une poudre, notamment une poudre collante ou pulvérulente, plus particulièrement une poudre dont les grains ont un diamètre moyen compris entre 50 microns et 1 millimètre.

Le dispositif de distribution est avantageusement configuré pour être utilisé dans un procédé de fabrication continu. Le dispositif de réception associé est dans ce cas un dispositif mobile, configuré pour déplacer le matériau dans une direction orthogonale à la zone de distribution, formant ainsi une couche ou un film de matériau, continu(e), de largeur L.

En utilisation, l'axe du dispositif de distribution, qui définit la direction longitudinale, est donc généralement disposé horizontalement.

Une direction radiale est une direction orthogonale à la direction longitudinale.

En fonctionnement du dispositif, on peut ainsi définir un repère XYZ avec Y une direction radiale horizontale et Z une direction radiale verticale.

En fonctionnement, le matériau quitte la cavité de stockage à travers la deuxième ouverture, par gravité et/ou par des forces liées au mouvement d'oscillation entrainant l'éjection du matériau hors de la cavité. La deuxième ouverture est donc orientée globalement vers le bas, eu égard à un plan horizontal XY passant par l'axe de rotation X du réservoir.

Généralement, le matériau entre dans la cavité de stockage par gravité, bien que d'autres dispositions soient envisageables. La plupart du temps toutefois, la première ouverture sera donc orientée globalement vers le haut, eu égard à un plan horizontal XY passant par l'axe de rotation X du réservoir.

Pour la suite, on définit une position d'équilibre du réservoir comme sa position par défaut en l'absence d'oscillation. Dans cette position, la deuxième ouverture est typiquement alignée verticalement avec l'axe de rotation du réservoir, de préférence la deuxième ouverture présente une symétrie orthogonale par rapport à un plan vertical XZ contenant cet axe de rotation.

En fonctionnement du dispositif, les oscillations du réservoir se font autour de la position d'équilibre. L'angle d'oscillation du réservoir est l'angle de rotation maximum entre la position d'équilibre et sa position la plus éloignée de cette position d'équilibre, durant l'oscillation.

La deuxième ouverture du réservoir a une longueur correspondant à la longueur L sur laquelle le matériau doit être distribué en sortie. Sa largeur, quant à elle, est suffisamment faible pour que le matériau ne soit pas évacué directement hors de la cavité de stockage mais au contraire y soit maintenu temporairement avant sa distribution. On comprendra aisément que les valeurs de longueur et de largeur de la deuxième ouverture dépendent de la largeur de distribution souhaitée, et de la nature et notamment de la granulométrie et de la coulabilité du matériau, qui peuvent varier. La conservation d'une réserve permanente de matériau à l'intérieur du réservoir et le mouvement d'oscillation de cette réserve permettent de répartir le matériau avec une granulométrie homogène à l'intérieur de la cavité et en particulier sur toute la longueur de la deuxième ouverture. Le matériau est ainsi distribué en sortie avec une volumétrie et une granulométrie homogènes sur toute la longueur L.

Les paramètres d'oscillation - en particulier son angle et sa fréquence
- sont avantageusement choisis en fonction des caractéristiques du matériau.

Selon une disposition particulièrement avantageuse, les paramètres d'oscillation sont choisis de sorte que l'oscillation du réservoir entraîne une oscillation relative entre le matériau contenu à l'intérieur de la cavité de stockage et la surface interne de ladite cavité. Le volume de poudre n'oscille pas ou oscille moins que le réservoir.

Les moyens d'entraînement du réservoir peuvent comprendre un moteur, ou un système d'entraînement non motorisé de type bielle manivelle.

Le réservoir est typiquement solidaire d'un arbre, monté rotatif par rapport à un bâti du dispositif. Les moyens d'entraînement sont par exemple montés sur ce bâti.

A l'intérieur du réservoir, la cavité de stockage présente avantageusement une surface intérieure cylindrique, de préférence de section circulaire ou ovale, qui limite l'adhésion du matériau.

Le réservoir, et en particulier la surface intérieure de la cavité de stockage, peut par exemple être réalisé dans un matériau métallique, notamment en acier inoxydable. La cavité de stockage peut aussi être recouverte intérieurement d'un revêtement destiné à limiter l'adhérence du matériau. Le réservoir et/ou un revêtement recouvrant intérieurement la cavité de stockage peut aussi être réalisé dans un matériau non métallique, typiquement un matériau polymère, notamment du PTFE, de sorte à éviter que le matériau soit contaminé par des particules d'usure.

Grâce au stockage temporaire et à la répartition par oscillation du matériau à l'intérieur de la cavité de stockage, le dispositif est particulièrement adapté pour répartir sur une longueur donnée L un matériau initialement obtenu à travers une sortie de diamètre inférieur à ladite longueur L.

Si la deuxième ouverture se présente sous la forme d'une fente, par nature longue et étroite, la première ouverture peut, elle, avoir une forme quelconque, notamment rectangulaire, carrée, circulaire, ou ovale.

La longueur de la deuxième ouverture, qui conditionne la longueur de la zone de distribution du matériau, doit être choisie ou ajustée selon les besoins mais est typiquement comprise entre 500 et 2000mm. Elle est de préférence sensiblement égale (i.e. strictement égale ou inférieure d'au plus 20 mm) à la longueur de la cavité de stockage, de sorte à éviter que le matériau ne se colmate aux extrémités de cette cavité.

Généralement, la longueur de la deuxième ouverture est supérieure à la longueur de la première ouverture.

Plus spécifiquement, le ratio entre la longueur de la première ouverture (sa dimension maximale mesurée dans la direction longitudinale) et la longueur de la deuxième ouverture peut être compris entre 0.1 et 0.5.

La longueur de la première ouverture peut par exemple être comprise entre 50 et 500mm.

Comme expliqué précédemment, la largeur de la deuxième ouverture doit être suffisamment faible pour éviter l'évacuation immédiate du matériau introduit dans la cavité du réservoir. La largeur de la deuxième ouverture est par exemple supérieure à 3 fois le diamètre moyen des particules du matériau, et de préférence supérieure à 5 fois ce diamètre moyen.

Par exemple, la largeur de la deuxième ouverture est comprise entre 1 et 15mm

La largeur de la première ouverture peut par exemple être comprise entre 50 et 500mm.

Selon une disposition avantageuse, la première et la deuxième ouverture sont opposées l'une à l'autre dans une direction orthogonale à la direction longitudinale de l'axe X (autrement dit, au moins une direction radiale intersecte chacune des deux ouvertures). De préférence, la première et la deuxième ouverture présentent chacune une symétrie par rapport à un même plan radial.

Dans la présente demande, une ouverture ou une fente est une zone enveloppant un ou plusieurs orifices, juxtaposés, permettant de laisser passer le matériau.

Ainsi, chacune parmi la première et la deuxième ouverture peut être formée d'un unique orifice entièrement traversant, ou peut être obturée partiellement par une structure en treillis permettant néanmoins le passage du matériau.

Selon une disposition particulière, la structure en treillis peut être un tamis, notamment un tamis formé d'orifices de diamètre compris entre 1 et 15mm, avec ledit diamètre correspondant au diamètre d'un cercle inscrit à l'intérieur dudit orifice.

Le dispositif étant généralement utilisé dans un procédé de fabrication en continu, il est avantageux qu'il comprenne des moyens de réglage de la largeur de la deuxième ouverture, de sorte notamment à pouvoir garantir un débit constant en sortie. Par exemple, la largeur de la deuxième ouverture peut être réglée en fonction de capteurs placés dans la cavité et permettant de contrôler le volume de matériau présent notamment dans les extrémités de la cavité. En réglant la largeur de la fente, on peut notamment assurer le maintien permanent d'une réserve de matériau à l'intérieur du réservoir, quels que soient des propriétés du matériau et/ou le débit de matériau entrant dans le réservoir.

Selon un exemple, la deuxième ouverture peut être délimitée au moins partiellement par un élément mobile dont la position est ajustable.

Plus particulièrement, le réservoir peut comprendre un corps comprenant un ou plusieurs éléments mobiles délimitant la deuxième ouverture.

On peut aussi mentionner que les capteurs permettent aussi d'agir par exemple sur le débit de matériau en entrée du dispositif.

Comme alternative ou en complément, le réservoir peut aussi comprendre des moyens de réglage de la longueur de la deuxième ouverture, de sorte à adapter la longueur de distribution du matériau, notamment en fonction de la longueur d'un dispositif de réception disposé en aval. Dans ce cas, les moyens de réglage de longueur peuvent régler simultanément la longueur de la cavité de stockage, ou peuvent être couplés à des moyens annexes réglant la longueur de la cavité de stockage.

Pour focaliser la distribution du matériau vers un dispositif de réception aval, le dispositif peut en outre comprendre des déflecteurs agencés à l'extérieur du réservoir, et configurés pour guider le matériau en sortie de la deuxième ouverture.

Les déflecteurs peuvent être mobiles ou ils peuvent être fixes. De préférence, les déflecteurs sont agencés de sorte que leur écartement en sortie soit réglable. Typiquement, cet écartement se trouve dans une plage comprise entre 5 et 100 mm. Les déflecteurs sont par exemple montés pivotants par rapport au bâti du dispositif de distribution.

Dans un autre cas particulier de l'invention ou en complément, le dispositif comprend au moins un élément perturbateur de flux à l'intérieur de la cavité de stockage.

Les perturbateurs de flux sont destinés à empêcher la formation d'agglomérats (boulettes) de matériau, assurant une distribution granulométrique constante sur toute la longueur de la deuxième ouverture.

Un perturbateur de flux peut par exemple être sous la forme d'une barre, d'une lame, ou d'une hélice, qui est fixée au réservoir, de préférence au droit de la deuxième ouverture. Il peut aussi s'agir d'un élément non fixé au réservoir tels qu'une ou plusieurs bille(s).

De préférence, le perturbateur de flux s'étend sur toute la longueur de la deuxième ouverture, et plus préférentiellement encore sur toute la longueur de la cavité de stockage.

Le dispositif pourrait également comprendre au moins un élément de fluidification, par exemple intégré dans le ou les perturbateurs de flux. Un tel élément de fluidification permet de renforcer l'effet des oscillations, notamment en faisant migrer le matériau vers les extrémités de la cavité. Ces éléments peuvent par exemple prendre la forme de buses ou d'un système vibrant.

Dans un cas particulier de l'invention, le dispositif de distribution comprend en outre au moins un capteur configuré pour mesurer au moins un paramètre représentatif de la quantité de matériau à l'intérieur de la cavité de stockage.

Un paramètre représentatif de la quantité de matériau à l'intérieur de la cavité est par exemple la masse du matériau contenu dans la cavité, une hauteur de matériau à l'intérieur de la cavité, une variation de l'angle ou de la vitesse d'oscillation, etc.

Les données fournies par les capteurs peuvent ensuite être transmises à une unité de contrôle qui compare la valeur mesurée à une valeur ou plage de valeurs cible et le cas échéant avertit l'utilisateur d'une déviation par rapport à la cible ou opère un ou plusieurs réglages pour tendre de nouveau vers la cible (par exemple par ajustement de la largeur de la fente, de la vitesse ou fréquence d'oscillation, du débit d'amenée de matériau, etc.).

Selon un autre aspect, l'invention concerne un système de dépôt linéaire d'un matériau comprenant :
- un dispositif d'amenée de matériau configuré pour délivrer ledit matériau à travers un orifice de sortie ;
- un dispositif de distribution linéaire tel que défini précédemment ; et
- un dispositif de réception agencé pour recevoir le matériau distribué par le dispositif de distribution linéaire.

Selon un exemple, le dispositif d'amenée de matériau peut être un broyeur.

Son orifice de sortie est par exemple, mais non limitativement, un orifice circulaire.

Le diamètre de cet orifice de sortie (i.e. la dimension maximale d'un cercle inscrit dans l'orifice) est typiquement compris entre 50 et 500mm

Grâce au dispositif de distribution linéaire selon l'invention, le ratio entre le diamètre de l'orifice de sortie (ou orifice d'amenée) du dispositif d'amenée et la longueur de la deuxième ouverture peut notamment être compris entre 0.1 et 0.5.

Selon un exemple, le système comprend en outre un élément de raccordement déformable configuré pour relier de façon étanche l'orifice de sortie du dispositif d'amenée de matériau et la première ouverture.

Selon un exemple, l'élément de raccordement peut être réalisé dans un matériau flexible. Des matières naturelles, synthétiques, ou métalliques flexibles peuvent être utilisées comme matériau flexible.

Le dispositif de réception agencé pour recevoir le matériau distribué est typiquement aligné avec le dispositif d'amenée dans la direction verticale.

Il s'agit par exemple d'un dispositif mobile, typiquement un tapis roulant ou un laminoir à rouleaux.

Selon un autre aspect, l'invention concerne un procédé d'utilisation d'un dispositif de distribution linéaire tel que défini précédemment pour la distribution d'un matériau, dans lequel on introduit une quantité de matériau dans le réservoir à travers la première ouverture et on soumet le réservoir à un mouvement d'oscillation autour de son axe pour distribuer le matériau à travers la deuxième ouverture.

La quantité de matériau introduite, la largeur de la deuxième ouverture et les caractéristiques d'oscillation du réservoir sont avantageusement telles qu'au cours de la distribution, une réserve de matériau, et en particulier une quantité prédéfinie de matériau, est conservée en permanence à l'intérieur de la cavité de stockage.

Avantageusement, le procédé comprend une étape préalable de remplissage du réservoir de sorte à former la réserve de matériau avant de débuter la distribution.

La hauteur minimale de la réserve, mesurée radialement au droit d'une extrémité axiale de la deuxième ouverture, est de préférence supérieure à 25% du diamètre du réservoir mesuré dans cette même direction radiale.

Le volume de la réserve est de préférence au moins égal à 50% du volume interne total de la cavité de stockage.

Comme décrit précédemment, l'angle d'oscillation du réservoir autour de son axe est supérieur à 5 degrés, de préférence entre 5 et 45 degrés, de préférence entre 10 et 30 degrés.

De même, la fréquence d'oscillation du réservoir autour de son axe est d'au moins 0.5Hz, et peut être comprise entre 1 et 20 Hz, de préférence entre 1 et 10 Hz.

Selon un exemple de mise en œuvre, au cours de la distribution, le matériau est introduit de façon continue, et de préférence avec un débit constant, à travers la première ouverture.

Par exemple, le débit d'entrée de matériau à travers la première ouverture peut être compris entre 50 et 500kg/h.

Le débit de sortie du matériau M à travers la deuxième ouverture est généralement sensiblement égal à ce débit d'entrée.

Par « sensiblement égal », on entend que la variation de débit n'excède de préférence pas quelques %, typiquement 5%, qui seront compensés par la réserve interne. Une variation minime peut résulter de caractéristiques du matériaux variables, comme par exemple la température ou l'humidité. En cas de variation plus importante du débit, un système de mesure et de réglage comme décrit précédemment pourra être utilisé.

Selon un exemple de mise en œuvre, au moins un paramètre représentatif de la quantité de matériau à l'intérieur de la cavité de stockage peut être mesuré au cours de la distribution.

Dans ce cas, au moins un paramètre parmi le débit d'entrée du matériau à travers la première ouverture, l'angle d'oscillation du réservoir, la fréquence d'oscillation du réservoir et la largeur de la deuxième ouverture peut le cas échéant être ajusté de sorte que ledit paramètre reste dans une plage de valeur prédéterminée.

### Brève description des dessins

Les particularités et les avantages de la présente invention apparaîtront avec plus de détails dans le cadre de la description qui suit avec un exemple de réalisation donné à titre illustratif et non limitatif en référence aux dessins ci-annexés qui représentent :
- La figure 1 est une vue latérale, en perspective, d'un dispositif de distribution selon un premier mode de réalisation de l'invention ;
- La figure 2 est une vue de dessus, en perspective, du dispositif de la figure 1 ;
- La figure 3 est une vue de dessous, en perspective, d'un dispositif de distribution selon un deuxième mode de réalisation de l'invention ;
- La figure 4 est une vue en coupe transversale (i.e. selon un plan orthogonal à l'axe X) du dispositif de distribution de la figure 3 ;
- La figure 5 est une vue latérale en perspective d'un dispositif de distribution selon un troisième mode de réalisation de l'invention ;
- La figure 6 est une vue latérale, en perspective, d'un dispositif de distribution selon un quatrième mode de réalisation de l'invention ;
- La figure 7 est un agrandissement de l'élément VI du dispositif de distribution de la figure 6 ;
- La figure 8 est une vue en coupe transversale selon la section VII-VII du dispositif de distribution de la figure 6 ;
- La figure 9 est une vue en coupe transversale d'un dispositif de distribution selon un cinquième mode de réalisation ;
- La figure 10 est une vue en coupe selon YZ d'un système de dépôt linéaire intégrant un dispositif de distribution selon l'invention ;
- La figure 11 est une vue en coupe selon XZ du système de dépôt linéaire de la figure 10 ;
- Les figures 12A et 12B illustrent le dispositif de la figure 1 en coupe transversale, respectivement dans sa position d'équilibre, avant le début de la distribution et dans sa position limite d'oscillation, pendant la distribution.

### Description détaillée

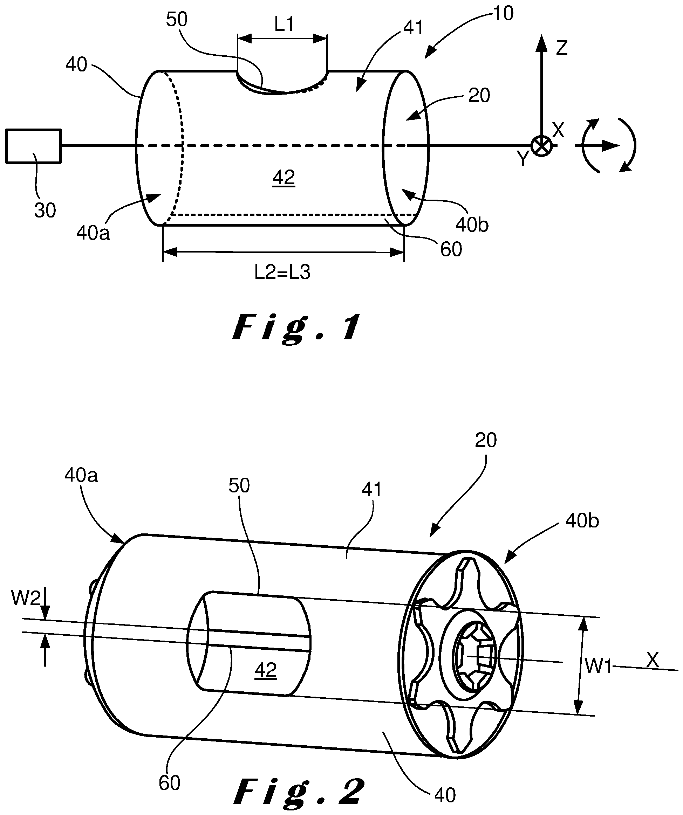

La figure 1 illustre un dispositif 10 de distribution linéaire d'un matériau M selon un premier mode de réalisation de l'invention.

Le matériau M est typiquement une poudre, notamment une poudre collante ou pulvérulente, plus particulièrement une poudre dont les grains ont un diamètre moyen compris entre 50 microns et 1 millimètre.

Dans l'exemple illustré sur la figure 1, le dispositif comprend :
- un réservoir 20 monté mobile en rotation autour d'un axe X définissant une direction longitudinale, et
- des moyens d'entraînement 30 du réservoir 20 dans un mouvement d'oscillation autour de son axe X.

En position d'utilisation du dispositif 10, l'axe X est positionné horizontalement.

Le réservoir 20 délimite une cavité de stockage 42 de longueur L3.

Il comprend, dans l'exemple, un corps de réservoir 40 en forme de cylindre droit à section circulaire, comportant deux parois d'extrémité axiale 40a, 40b parallèles entre elles et reliées par une paroi principale 41.

La cavité de stockage 42, délimitée à l'intérieur dudit corps 40, présente une surface intérieure cylindrique, de section circulaire, qui limite l'adhérence du matériau à ladite surface.

La cavité de stockage 42 est destinée à contenir une réserve permanente du matériau M comme il sera décrit plus en détail dans la suite.

Comme illustré sur la figure 1, le réservoir 20 comporte une première ouverture 50, typiquement de forme circulaire ou oblongue, pour l'entrée du matériau à l'intérieur de la cavité 42 et une deuxième ouverture 60 sous la forme d'une fente longitudinale, pour la sortie du matériau hors de la cavité 42 et s'étendant sur sensiblement toute sa longueur L3.

Dans l'exemple illustré, la première ouverture 50 est centrée longitudinalement entre les deux parois d'extrémité 40a et 40b.

En fonctionnement du dispositif 10, et en particulier dans sa position d'équilibre, la première ouverture 50 est orientée globalement vers le haut, eu égard à la direction verticale, et la deuxième ouverture 60, globalement vers le bas. Autrement dit, la deuxième ouverture 60 est située en-dessous d'un plan horizontal XY incluant l'axe X et la première ouverture 50 est généralement située au-dessus dudit plan horizontal XY.

Avantageusement, la première et la deuxième ouverture 50, 60 sont opposées l'une à l'autre dans une direction radiale orthogonale à la direction longitudinale X (autrement dit, au moins une direction radiale intersecte chacune des deux ouvertures 50, 60).

Dans l'exemple particulier représenté, les deux ouvertures 50, 60 présentent chacune une symétrie par rapport à un plan radial XZ, à l'état d'équilibre du dispositif 10.

Comme illustré, la longueur L2 de la deuxième ouverture 60, mesurée dans la direction longitudinale X, est supérieure à la longueur L1 de la première ouverture 50 mesurée dans la même direction X. Plus spécifiquement, le ratio entre la longueur L1 de la première ouverture 50 (sa dimension maximale mesurée dans la direction longitudinale) et la longueur L2 de la deuxième ouverture 60 est typiquement compris entre 0.1 et 0.5. Dans l'exemple de la figure 1, il est par exemple égal à 0.3.

La longueur L2 de la deuxième ouverture 60 conditionne la longueur d'une zone de distribution du matériau, et doit donc être choisie ou ajustée selon les besoins. Elle est typiquement comprise entre 500 et 2000mm.

La longueur de la première ouverture peut, elle, être comprise par exemple entre 50 et 500mm.

La deuxième ouverture 60 a de préférence une largeur w2 constante sur toute sa longueur L2.

Comme illustré sur la figure 2, cette largeur w2 est typiquement inférieure à la largeur w1 de la première ouverture 50. Ceci n'est toutefois pas limitatif.

La largeur w2 de la deuxième ouverture 60 est en réalité sélectionnée de sorte que le matériau M ne soit pas évacué directement hors de la cavité de stockage 42 mais au contraire y soit maintenu temporairement avant sa distribution.

Ainsi, la largeur w2 de la deuxième ouverture 60 dépend de la nature du matériau M à distribuer, et notamment de sa granulométrie.

Elle est de préférence supérieure à au moins 3 fois le diamètre moyen des particules du matériau M et de préférence supérieure à 5 fois ce diamètre moyen.

Les moyens 30 d'entraînement du réservoir, qui sont représentés schématiquement sur la figure 1, peuvent être formés par un moteur, ou peuvent être non motorisés et inclure un système manuel de type bielle manivelle.

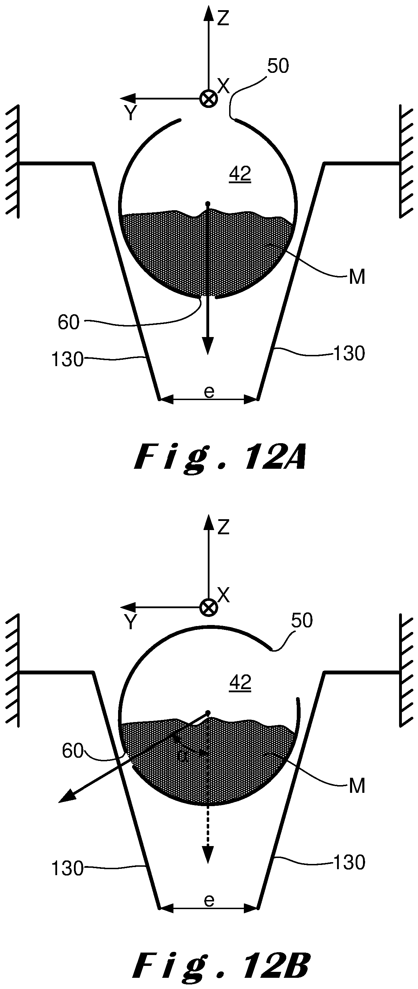

Le fonctionnement du dispositif 10 est mieux compris à la lumière des figures 12A et 12B.

Le matériau M est introduit dans la cavité de stockage 42 par la première ouverture 50.

Avant que la distribution du matériau ne démarre, une réserve de ce matériau est d'abord formée à l'intérieur de la cavité de stockage 42, comme illustré sur la figure 12A.

La deuxième ouverture 60 étant sous la forme d'une fente étroite, le matériau M n'est pas évacué directement hors de la cavité de stockage 42. La largeur w2 de la deuxième ouverture 60 est choisie dans ce sens, en fonction également de la nature et notamment de la granulométrie et de la coulabilité du matériau, qui peuvent varier.

Au cours de la distribution, le réservoir 20 est mis en mouvement autour de son axe de rotation X, par l'action des moyens d'entraînement 30.

Plus spécifiquement, le réservoir 20 est soumis à un mouvement d'oscillation dont la fréquence est d'au moins 0.5 Hz et peut être comprise entre 1 et 20 Hz, de préférence entre 1 et 10 Hz. L'angle α d'oscillation du réservoir 20 (voir figure 12B) autour de l'axe X est typiquement supérieur à 5 degrés, de préférence entre 5 et 45 degrés, encore plus préférentiellement entre 10 et 30 degrés.

La conservation d'une réserve permanente de matériau à l'intérieur du réservoir et le mouvement d'oscillation du réservoir permettent de répartir le matériau avec une granulométrie homogène à l'intérieur de la cavité de stockage 42 et en particulier sur toute la longueur L2 de la deuxième ouverture 60.

Comme il apparaît sur les figures 12A, 12B, il est avantageux, pour améliorer encore l'homogénéité de distribution, que le volume de matériau n'oscille pas ou peu avec le réservoir 20. On obtient ainsi une oscillation relative entre le matériau M contenu à l'intérieur de la cavité de stockage 42 et la surface interne de ladite cavité 42.

Le réservoir 20, et en particulier la surface intérieure du corps de réservoir 40, peut par exemple être réalisé dans un matériau métallique, notamment en acier inoxydable. Le corps de réservoir 40 peut aussi être recouvert intérieurement d'un revêtement destiné à limiter l'adhérence du matériau M. Le corps de réservoir 40 et/ou un revêtement recouvrant intérieurement ce corps 40 peuvent aussi être réalisés dans un matériau non métallique, typiquement un matériau polymère, notamment du PTFE, de sorte à éviter que le matériau soit contaminé par des particules d'usure.

Comme illustré sur les figures 12A, 12B, le dispositif 10 comprend deux déflecteurs 130 agencés à l'extérieur du réservoir 20 et de part et d'autre de la deuxième ouverture 60, de sorte à pouvoir guider le matériau lors de sa distribution. Dans l'exemple, les déflecteurs 130 sont fixés à un bâti fixe 160 du dispositif. Un écartement e entre les deux déflecteurs, définissant la largeur de la zone de distribution du matériau, est typiquement compris entre 5 et 100 mm.

Selon une disposition particulière de l'invention, un ou chaque déflecteur peut être mobile et ajustable en position, de sorte à pouvoir faire varier l'écartement e et ainsi la largeur de la zone de distribution.

Comme expliqué précédemment, la largeur de la deuxième ouverture garantit la conservation d'une réserve de matériau M à l'intérieur de la cavité de stockage 42. Cette largeur varie cependant en fonction des propriétés du matériau, notamment sa granulométrie et sa coulabilité. De façon à pouvoir adapter le dispositif à des matériaux différents, il est ainsi avantageux que la largeur w2 de la deuxième ouverture 60 soit réglable.

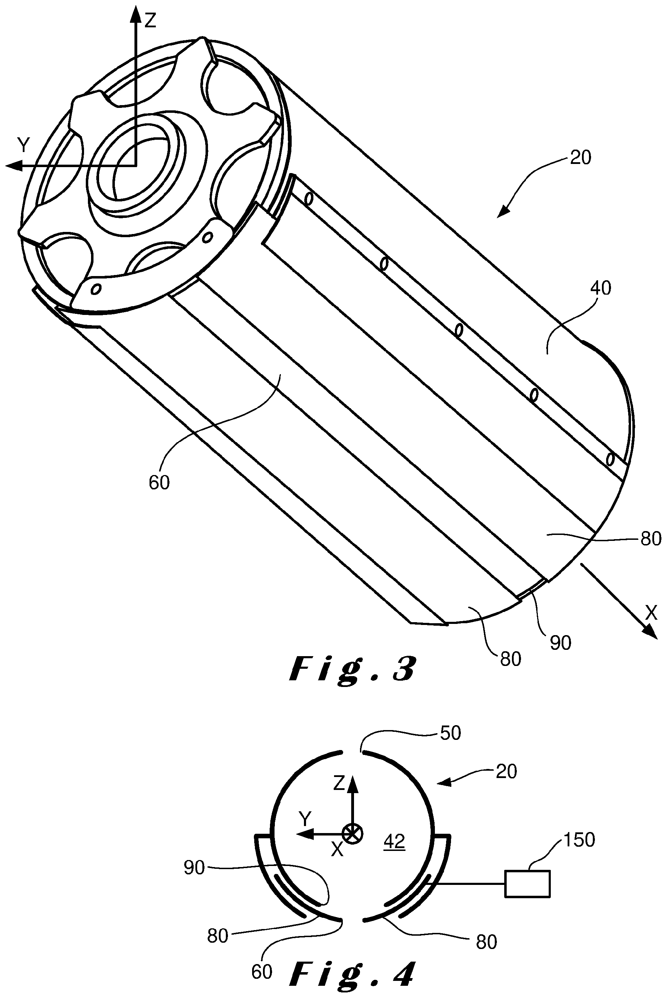

Les figures 3 et 4 illustrent un dispositif de distribution linéaire d'un matériau 10 dans lequel le réservoir 20 est muni de moyens de réglage 70 de la largeur w2 de sa deuxième ouverture 60.

Dans l'exemple des figures 3 et 4, le corps de réservoir 40 comprend une fenêtre 90 et deux éléments ajustables 80 montés mobiles de part et d'autre de cette fenêtre 90 et l'obturant partiellement, la portion de la fenêtre 90 non-obturée formant la deuxième ouverture 60 du réservoir 20. Comme alternative, le réservoir pourrait aussi comprendre un unique élément ajustable 80.

Le réglage de largeur de la deuxième ouverture 60 peut être réalisé à la main, par l'utilisateur, au moyen de tout système de blocage approprié. Comme alternative, le réglage peut être motorisé, et notamment actionné par une unité de contrôle 150 configurée pour opérer soit sous l'effet d'une instruction de l'utilisateur dans ce sens, soit dans le cadre d'une boucle de rétroaction fonctionnant par intermittence ou en continu et typiquement basée sur des résultats de mesure d'au moins un paramètre représentatif du volume de matériau M à l'intérieur de la cavité 42.

Selon une variante de réalisation non représentée, le dispositif 10 pourrait aussi comprendre des moyens de réglage de la longueur L2 de la deuxième ouverture 60, permettant d'adapter la longueur de distribution en fonction du besoin et donc de varier les possibilités d'utilisation du dispositif.

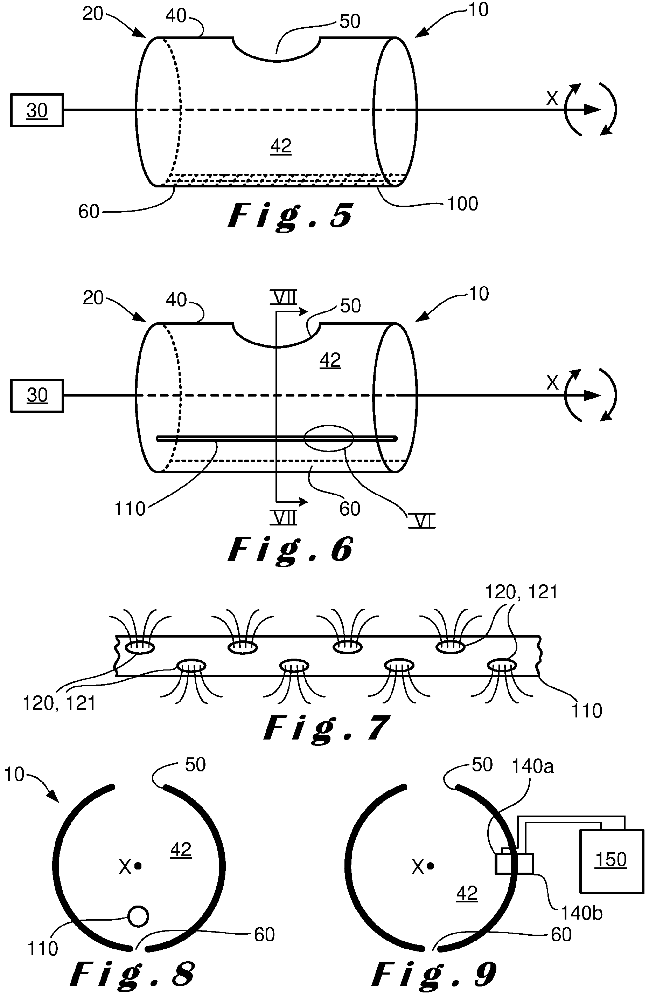

La figure 5 illustre un dispositif 10 selon un troisième mode de réalisation de l'invention, dans lequel le réservoir 20 comprend un tamis 100 recouvrant entièrement la deuxième ouverture 60. Le tamis 100 est formé d'orifices de diamètre permettant le passage du matériau selon sa granulométrie, mais empêchant le passage d'agglomérats.

En fonction de la nature du matériau, le diamètre des orifices peut par exemple être compris entre 1 et 15mm, ledit diamètre correspondant au diamètre d'un cercle inscrit à l'intérieur dudit orifice.

La figure 6 illustre un dispositif 10 selon un quatrième mode de réalisation de l'invention.

Le dispositif 10 comprend ici un élément perturbateur de flux 110 logé à l'intérieur de la cavité de stockage 42 du réservoir 20.

Dans l'exemple illustré, l'élément perturbateur de flux 110 est sous la forme d'une barre fixée à l'intérieur du corps de réservoir 40 et s'étendant parallèlement à l'axe longitudinal X, sur toute la longueur de la cavité de stockage 42 ou à tout le moins sur toute la longueur L2 de la deuxième ouverture 60.

Comme illustré sur la figure 8 qui montre le même dispositif 10 selon une coupe transversale, la barre 110 est avantageusement placée radialement au droit de la deuxième ouverture 60 et à proximité de celle-ci, typiquement à une distance, mesurée radialement, sensiblement similaire à la largeur de la seconde ouverture.

En complément ou comme alternative, un ou plusieurs éléments perturbateurs de flux 110 ayant d'autres formes peuvent être agencés à l'intérieur de la cavité de stockage 42 pour y casser les agglomérats de matériau. Par exemple, une ou plusieurs lames ou hélices peuvent être fixées au corps 40 et/ou des billes peuvent être disposées à l'intérieur de la cavité de stockage 42 sans être fixées au réservoir.

Selon une disposition particulièrement avantageuse illustrée sur la figure 7, le dispositif 10 peut en outre comprendre au moins un élément de fluidification 120 favorisant la migration du matériau vers les extrémités axiales de la cavité de stockage 42. Par exemple, le dispositif peut comprendre des buses d'air 121 intégrées dans l'élément perturbateur de flux 110 sous forme de barre. Alternativement, d'autres éléments de fluidification 120 peuvent être utilisés, comme par exemple un système vibrant.

Grâce aux éléments de fluidification 120, le matériau peut être distribué en sortie avec une volumétrie et une granulométrie homogènes sur toute la longueur L2.

Comme illustré sur la figure 9, il est avantageux que le dispositif comprenne au moins un capteur 140a, 140b permettant de mesurer des paramètres représentatifs de la quantité de matériau à l'intérieur de la cavité de stockage 42. Le ou les capteurs 140a, 140b peuvent par exemple être placés dans la cavité de stockage 42 et/ou à l'extérieur du réservoir 20 et/ou sur l'arbre du réservoir 20, en fonction du ou des paramètres qu'ils sont destinés à mesurer.

Un capteur 140a, 140b peut par exemple mesurer la masse du réservoir 20, ou une hauteur de matériau M, notamment au niveau de l'une ou des extrémités longitudinales de la cavité, ou une variation de l'angle ou de la vitesse d'oscillation.

Les valeurs mesurées sont ensuite transmises à l'unité de contrôle 150 qui compare chaque valeur mesurée à une valeur ou plage de valeurs cible. Le système s'adapte ainsi pendant toute la durée d'utilisation du dispositif de distribution linéaire d'un matériau 10 de sorte à assurer une distribution volumétrique et granulométrique homogène en continu du matériau M.

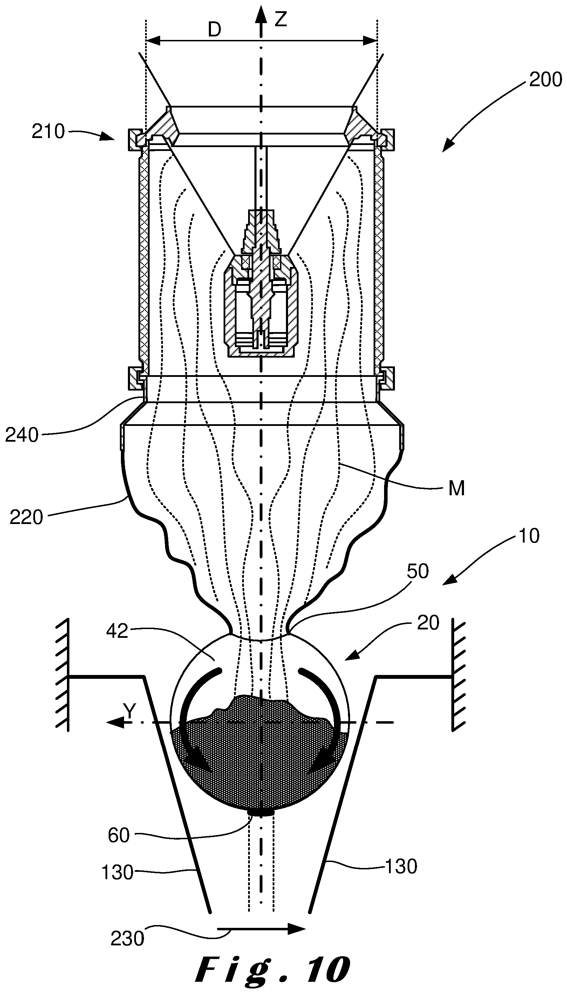

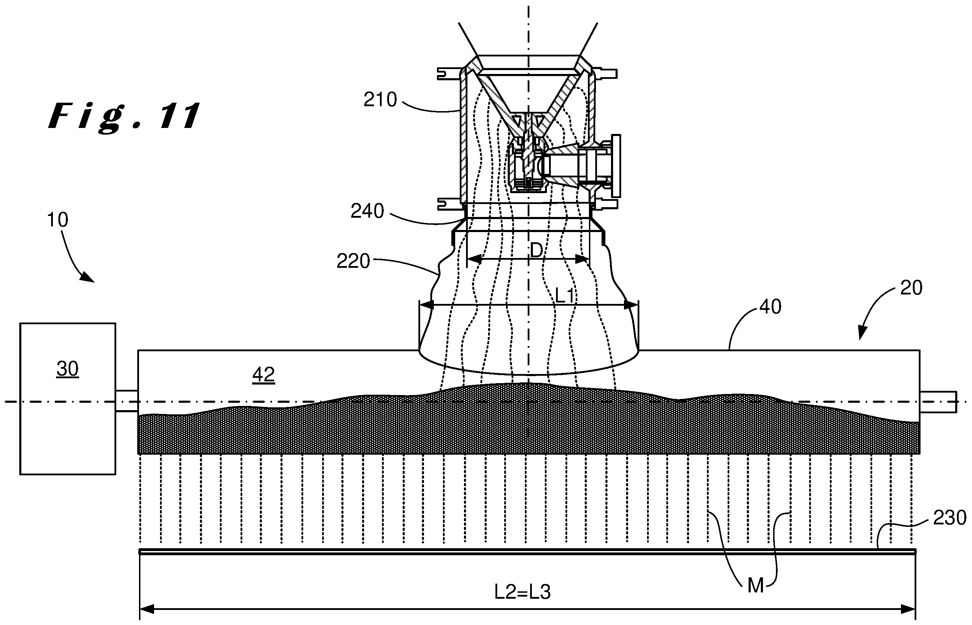

Les figures 10 et 11 illustrent un système de dépôt linéaire 200 d'un matériau M selon l'invention.

Le système de dépôt linéaire 200 comprend ici :
- un dispositif d'amenée 210 de matériau muni d'un orifice de sortie 240,
- un dispositif de distribution linéaire 10 tel que défini précédemment,
- un élément de raccordement 220 déformable qui relie de façon étanche l'orifice de sortie 240 du dispositif d'amenée 210 de matériau et la première ouverture 50 du dispositif de distribution linéaire 10,
- un dispositif de réception 230 agencé pour recevoir le matériau distribué par le dispositif de distribution linéaire 10 à travers la deuxième ouverture 60.

Dans l'exemple particulier illustré, le dispositif d'amenée 210 de matériau M, l'élément de raccordement 220, le dispositif de distribution 10 et le dispositif de réception 230 sont tous alignés verticalement selon l'axe Z.

Le dispositif d'amenée 210 de matériau est par exemple un broyeur qui délivre le matériau sous forme de poudre à travers son orifice de sortie 240, typiquement de forme circulaire et de diamètre D, typiquement compris entre 50 et 500mm

D'autres dispositifs d'amenée 210 de matériau ainsi que d'autres formes d'orifice de sortie 240 (par exemple, ovale, rectangulaire, ou carrée) pourront toutefois être envisagés.

Grâce au dispositif de distribution linéaire selon l'invention, le ratio entre le diamètre D et la longueur L2 de la deuxième ouverture 60 peut notamment être compris entre 0.1 et 0.5, comme il sera décrit dans la suite.

Selon un exemple, l'élément de raccordement 220 peut être réalisé dans un matériau flexible. Des matières naturelles, synthétiques, ou métalliques flexibles peuvent être utilisées comme matériau flexible.

Le dispositif de réception 230 peut être fixe et/ou mobile, généralement mobile et destiné à transporter en continu le matériau distribué. Il s'agit typiquement d'une bande de transport ou d'un laminoir à rouleaux.

Selon un mode de mise en œuvre du procédé d'utilisation du dispositif 10 de la présente invention, une quantité de matériau est tout d'abord introduite dans la cavité de stockage 42 à travers la première ouverture 50, de sorte à créer dans ladite cavité une réserve de ce matériau M.

La hauteur minimale de cette réserve, mesurée radialement au droit d'une extrémité axiale de la deuxième ouverture, est de préférence supérieure à 25% du diamètre du réservoir mesuré dans cette même direction.

Le volume de la réserve est de préférence au moins égal à 50% du volume interne total de la cavité de stockage.

Lors de cette étape préalable de remplissage, le réservoir 20 est typiquement maintenu dans sa position d'équilibre (figure 12A) ou au contraire dans une position pivotée (pouvant correspondre à sa limite d'oscillation, figure 12B) pour éviter la sortie du matériau.

Puis, lors de la distribution, le réservoir 20 est soumis à un mouvement d'oscillation autour de son axe X pour distribuer le matériau à travers la deuxième ouverture 60.

La quantité de matériau introduite, la largeur w2 de la deuxième ouverture 60 et les caractéristiques d'oscillation du réservoir 20 sont choisies de sorte qu'au cours de la distribution, la réserve de matériau est conservée en permanence à l'intérieur de la cavité de stockage 42.

Le matériau M est avantageusement introduit avec un débit constant, par exemple compris entre 50 et 500kg/h, à travers la première ouverture 50. Et le débit de sortie du matériau M à travers la deuxième ouverture 60 est généralement sensiblement égal à ce débit d'entrée.

Par « sensiblement égal », on entend que la variation de débit n'excède de préférence pas quelques %, typiquement 5%, qui seront compensés par la réserve ou par un système de régulation mettant en œuvre des capteurs tels que définis précédemment en lien avec la figure 9.

Selon un exemple de mise en œuvre, au moins un paramètre représentatif de la quantité de matériau à l'intérieur de la cavité de stockage peut par exemple être mesuré au cours de la distribution. Ce paramètre peut par exemple être la masse du matériau contenu dans la cavité, une hauteur de matériau à l'intérieur de la cavité, une variation de l'angle ou de la vitesse d'oscillation, etc.

Puis au moins un paramètre parmi le débit d'entrée du matériau à travers la première ouverture, l'angle d'oscillation du réservoir, la fréquence d'oscillation du réservoir et la largeur de la deuxième ouverture peut le cas échéant être ajusté de sorte que le ou les paramètre(s) reste(nt) dans une plage de valeur prédéterminée.

La régulation se fait avantageusement en boucle fermée, de manière intermittente ou continue.

Sous l'effet du mouvement d'oscillation du réservoir finalement, la réserve se répartit en permanence à l'intérieur de la cavité 42 de sorte à s'étendre jusqu'aux deux extrémités de la cavité 42, comme illustré sur la figure 11, et le matériau est distribué en sortie avec une volumétrie et une granulométrie homogènes sur toute la longueur L2.

## Revendications

1. Dispositif (10) de distribution linéaire d'un matériau (M), ledit dispositif comprenant :
- un réservoir (20) monté mobile autour d'un axe (X) définissant une direction longitudinale, le réservoir (20) délimitant une cavité de stockage (42) et étant muni d'une première ouverture (50) pour l'entrée du matériau à l'intérieur de ladite cavité (42) et d'une deuxième ouverture (60) sous la forme d'une fente longitudinale pour la sortie du matériau hors de ladite cavité (42); et
- des moyens d'entraînement (30) du réservoir (20) dans un mouvement d'oscillation autour de son axe (X).

2. Dispositif de distribution linéaire (10) selon la revendication 1, dans lequel le ratio entre la longueur (L1) de la première ouverture (50) et la longueur (L2) de la deuxième ouverture (60) est compris entre 0.1 et 0.5

3. Dispositif de distribution linéaire (10) selon la revendication 1 ou 2, comprenant en outre des moyens de réglage (70) de la largeur (w2) de la deuxième ouverture (60).

4. Dispositif de distribution linéaire (10) selon l'une quelconque des revendications 1 à 3, comprenant en outre un tamis (100) recouvrant au moins partiellement la deuxième ouverture (60).

5. Dispositif de distribution linéaire (10) selon l'une quelconque des revendications 1 à 4, comprenant au moins un élément perturbateur de flux (110) logé à l'intérieur de la cavité de stockage (42), de préférence au droit de la deuxième ouverture (60).

6. Dispositif de distribution linéaire (10) selon l'une quelconque des revendications 1 à 5, comprenant en outre au moins un élément (120) de fluidification du matériau à l'intérieur de la cavité de stockage (42).

7. Dispositif de distribution linéaire (10) selon l'une quelconque des revendications 1 à 6, dans lequel la largeur (w2) de la deuxième ouverture est supérieur à 3 fois le diamètre moyen des particules du matériau.

8. Dispositif de distribution linéaire (10) selon l'une quelconque des revendications 1 à 7, comprenant en outre des déflecteurs (130) agencés à l'extérieur du réservoir et configurés pour guider le matériau en sortie de la deuxième ouverture.

9. Dispositif de distribution linéaire (10), selon l'une quelconque des revendications 1 à 8, comprenant en outre au moins un capteur (140) configuré pour mesurer au moins un paramètre représentatif de la quantité de matériau à l'intérieur de la cavité de stockage (42).

10. Dispositif de distribution linéaire (10) selon l'une quelconque des revendications 1 à 9, comprenant en outre des moyens de réglage (70) de la longueur (L2) de la deuxième ouverture (60).

11. Système de dépôt linéaire (200) d'un matériau comprenant :
- un dispositif d'amenée (210) de matériau, notamment un broyeur, configuré pour délivrer ledit matériau à travers un orifice de sortie (240) ;
- un dispositif de distribution linéaire (10) selon l'une quelconque des revendications 1 à 10 ; et
- un dispositif de réception (230) agencé pour recevoir le matériau distribué par le dispositif de distribution linéaire (10).

12. Système de dépôt linéaire (200) selon la revendication 11, comprenant en outre un élément de raccordement (220) déformable configuré pour relier de façon étanche l'orifice de sortie (240) du dispositif d'amenée (210) de matériau et la première ouverture (50).

13. Procédé d'utilisation d'un dispositif selon l'une quelconque des revendications 1 à 10 pour la distribution d'un matériau, dans lequel on introduit une quantité de matériau dans la cavité de stockage à travers la première ouverture (50) et on soumet le réservoir (20) à un mouvement d'oscillation autour de son axe pour distribuer le matériau à travers la deuxième ouverture (60).

14. Procédé selon la revendication 13, dans lequel la quantité de matériau introduite, la largeur de la deuxième ouverture (60) et les caractéristiques d'oscillation du réservoir (20) sont telles qu'au cours de la distribution, une réserve de matériau est conservée en permanence à l'intérieur de la cavité de stockage (42).

15. Procédé selon la revendication 13 ou 14, dans lequel l'angle d'oscillation du réservoir (20) autour de son axe est supérieur à 5 degrés, de préférence entre 5 et 45 degrés, de préférence entre 10 et 30 degrés.

16. Procédé selon l'une quelconque des revendications 13 à 15, dans lequel la fréquence d'oscillation du réservoir (20) autour de son axe est d'au moins 0.5Hz, et peut être comprise entre 1 et 20Hz, de préférence entre 1 et 10Hz.

17. Procédé selon l'une quelconque des revendications 13 à 16, dans lequel le matériau est introduit de façon continue, et de préférence avec un débit constant, à travers la première ouverture (50).
